Europäisches Patentamt

European Patent Office

Office européen des brevets

(11) Publication number: **0 186 407 B1**

## EUROPEAN PATENT SPECIFICATION

(12)

(45) Date of publication of patent specification: **11.03.92**  (51) Int. Cl.⁵: **B32B 17/10**, C03C 27/12

(21) Application number: **85309151.0**

(22) Date of filing: **16.12.85**

(54) Laminar glass assemblies.

(30) Priority: **15.12.84 GB 8431713**
                **18.04.85 GB 8510008**

(43) Date of publication of application:
      **02.07.86 Bulletin 86/27**

(45) Publication of the grant of the patent:
      **11.03.92 Bulletin 92/11**

(84) Designated Contracting States:
      **AT BE CH DE FR IT LI LU NL SE**

(56) References cited:
      EP-A- 0 116 924        DE-A- 1 704 619
      DE-B- 1 067 319        FR-A- 2 101 083
      FR-A- 2 519 967        US-A- 3 499 697

(73) Proprietor: **Alstofilm Limited**
      **Saxon Way Battledown Industrial Estate**
      **Cheltenham, Gloucestershire(GB)**

(72) Inventor: **Cook, Trevor Adrian**
      **Meadowcote Tewkesbury Road Uckington**
      **Cheltenham Gloucestershire(GB)**
      Inventor: **Yates, John Edward**
      **117 Gloucester Road**
      **Cheltenham Gloucestershire(GB)**

(74) Representative: **Jones-Robinson, Stanley**
      **Sunny Bank, The Slad, Pope's Hill**
      **Newnham-on-Severn, Gloucestershire GL14**
      **1JS(GB)**

EP 0 186 407 B1

## Description

The invention relates to laminar glass assemblies and is particularly, but by no means exclusively, concerned with such assemblies having solar control and/or energy saving properties.

Assemblies are known comprising a sheet of glass to one surface of which is adhered a plastics film having solar control and/or energy saving properties. Such a plastics film may have a metallized or otherwise applied coating which transmits incident sunlight according to the angle of incidence of the sun's rays, the film may provide an ultraviolet barrier, and the coating reflects heat back into the building in which the glass is used.

Assemblies are also known, commonly referred to as "laminated safety glass", which comprise a plastics sheet sandwiched between two sheets of annealed glass to provide strengthened anti-splinter glass for safety and anti-bandit purposes. Due to the use of annealed glass sheets this avoids the distortion which is obtained with homogeneous "toughened" glass.

Laminated assemblies have been proposed with an intermediate film disposed between outer glass sheets. In DE 1 067 319 a multiple interference film is employed, but this has to be deposited as a multiple coating on one of the outer glass sheets. In DE 1 704 619, FR 2 519 976 and US 3 499 697 the intermediate film is disposed between intervening plastics supporting layers, the whole forming a bonded assembly. However, in these cases the supporting layers are of a flexible nature and manufacture involves a complex bonding procedure.

The object of the invention is to provide laminar glass assemblies with an intermediate plastics film and providing improved solar control and/or energy saving and/or strength properties as compared with known assemblies.

According to one aspect of the invention, a laminar glass assembly comprises two sheets of glass with a plastics film disposed between them, the plastics film being adhered to the glass sheets by respective adhesive layers, the plastics film having a thickness within the range of 0.025 to 0.0254 mm and being directly adhered to one of said glass sheets by a thin adhesive layer and to the other of said glass sheets by a thicker layer of adhesive having substantial thickness compared to that of the film and within the range of 0.1 to 6.0 mm such as to provide structural reinforcement of the resultant laminate.

The plastics film may be commercially available plastics film provided with a solar control/energy saving coating and an adhesive coating. The latter coating is preferably a pressure-sensitive adhesive although it may be of a type which is water activated before applying the film to the closely adjacent glass sheet. Such a plastics film is normally applied to the inner surface of a glass window, where it is susceptible to damage and prone to separation from the glass. When positioned between two sheets of glass in accordance with the invention it is protected against damage, and the tendency for separation from the glass is overcome.

The plastics film is preferably a polyester-based film, desirably a stretched polyester film as sold under the registered trade mark "Melinex", with the two adhesive layers both being polyester-compatible adhesives. As already mentioned one adhesive layer is preferably provided by a precoated pressure-sensitive adhesive and the structural, reinforcing adhesive layer is preferably a minimum two-component polyester-based resin with polyester-compatible adhesive properties and which can be applied to provide a layer of the desired thickness. Such a construction not only provides a stable assembly, with complete protection of the plastics film, but the thicker structural layer of resin in combination with the plastics film provides a high-strength assembly which is highly resistant to penetration and to splintering.

According to a more limited aspect of the invention a laminar glass assembly comprises two sheets of annealed glass with a polyester-based plastics film disposed between them, the plastics film being directly adhered to one of the sheets of glass by a thin layer of polyester-compatible adhesive and being attached to the other sheet of glass by a synthetic resin layer having structural and polyester-compatible adhesive properties and which is of substantial thickness as compared with the thickness of said plastics film whereby to provide reinforcement of the resultant laminate.

Any suitable synthetic resin can be used for the thicker adhesive layer, the principal requirements being that it has structural properties and is compatible with the plastics film and does not break down and "yellow" under sunlight. To prevent such yellowing a UV inhibitor may be mixed into the resin prior to application thereof. In addition to the two-component polyester-based resin already referred to with a polyester-based plastics film, a cold-cure two-component polyurethane resin and a one-part UV cured acrylic resin have been found useful in practical realisations of the invention.

The plastics film may itself be a laminate of two plastics sheets with a solar control/energy saving layer between them. Such plastics films are commercially available with said layer being a metallized layer applied to one of the plastics sheets prior to lamination thereof, by a vacuum deposition or sputtering process. These films, employing polyester plastics sheets, have properties determined by the nature of the intermediate layer and its method of application. They are conveniently classified as either "low-E film" which has low emissivity and operates to retain heat within a building with which it is used, or "solar control film" which operates to keep the heat from sunlight out of the building. Thus a low-E film is in general used in cooler climates, and a solar control film in the sunnier and warmer climates.

When the plastics film is a solar control/energy saving film, conveniently of bi-laminate form, under high-intensity sunlight a considerable temperature rise can occur within the assembly of the invention, particularly on the outer side of the film. Thus the assembly should be installed in a building with the thicker adhesive, or resin in-fill, layer on the inner side of the plastics film. Furthermore, it is necessary to use a resin which is stable at the elevated temperatures involved, that is up to at least a temperature of the order of 38°C and preferably up to a temperature of about 49°C.

According to another aspect of the invention, a laminar glass assembly comprises inner and outer sheets of annealed glass with a bi-laminate plastics film disposed between them, said film comprising two plastics laminae with an intermediate metallized solar control/energy saving layer, the plastics film being adhered to said outer sheet of glass by a thin pre-coated adhesive layer and adhered to said inner sheet of glass by a synthetic resin layer which is of substantial thickness as compared with the thickness of said plastics film and has structural properties whereby the assembly is reinforced by the synthetic resin layer, said resin being compatible with the plastics film material and stable without tendency to yellow under sunlight to a temperature at least of the order of 38°C, and preferably to a temperature of about 49°C.

Although an assembly in accordance with the invention conveniently consists of the two sheets of glass, the plastics film and the intervening adhesive layers only, it may comprise three or more sheets of glass with a plastics film similarly disposed between each two adjacent glass sheets. This enables an assembly of extremely high strength to be achieved, for example for use in bandit and bullet proof glass constructions.

The glass sheets preferably have a thickness within the range of 2 to 12 mm, with the plastics film having a thickness in the range of 0.025 to 0.254 mm with the lower limit being 0.076 mm when strength is a major consideration. The thicker resin layer, which in accordance with a novel method of the invention is a poured "in-fill" layer, has a thickness in the range of 0.1 to 6.0 mm.

The invention will now be further described with reference to the accompanying diagrammatic drawings which illustrate, by way of example, a laminar glass assembly in accordance with the invention and a specific embodiment thereof. In the drawings:

Fig. 1 illustrates the assembly in edge view; and

Fig. 2 similarly illustrates the specific embodiment.

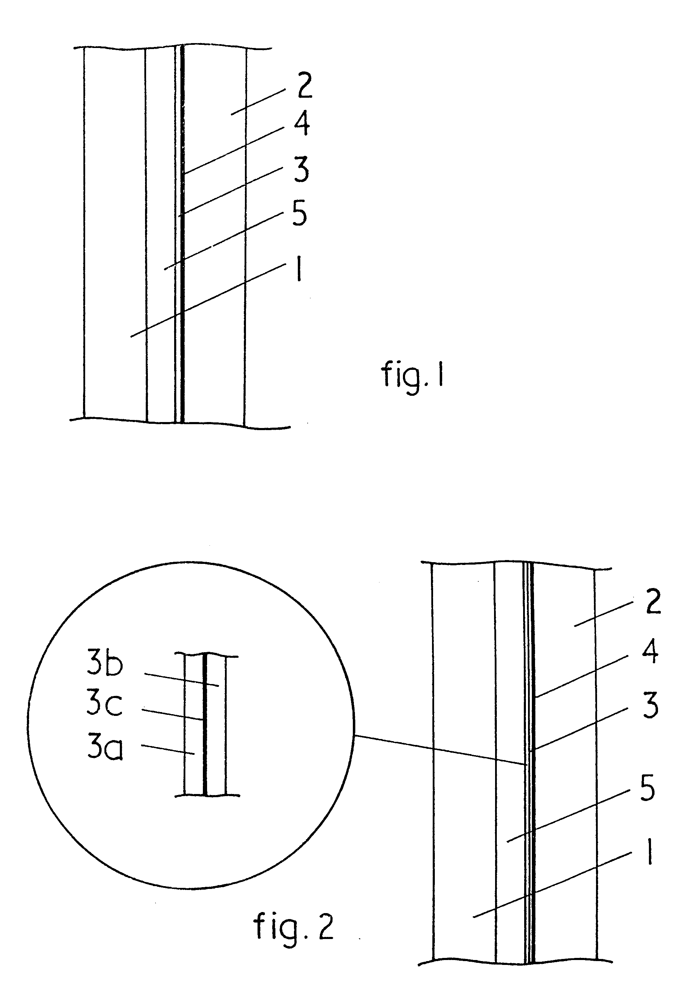

The assembly in accordance with the invention which is illustrated in Fig. 1 comprises two sheets 1 and 2 of annealed glass between which is disposed a plastics film 3. The film 3 is directly adhered to the glass sheet 2 by a thin layer 4 of a resin adhesive, which is of negligible thickness so that the film 3 is effectively directly bonded to the glass sheet 2. The film 3 is adhered to the glass sheet 1 through a thick layer of resin adhesive 5, the sheets 1 and 2 and the film 3 being disposed in parallel relationship.

For the film 3 a stretched polyester-based plastics is conveniently used, such as that sold under the registered trade mark "Melinex", and this may be pre-coated with a pressure-sensitive adhesive which provides the layer 4. During manufacture the adhesive-coated surface of the film 3 is applied to and pressed against the glass sheet 2 with full surface contact, and use of the pre-coated plastics film 3 facilitates machine application to the glass sheet 2. The layer 5, which is in-fill synthetic resin with polyester-compatible adhesive properties and may be of a minimum two-component form, is now applied by pouring on to the film 3 which is disposed horizontally for this purpose, and the glass sheet 1 applied to the resin layer 5 to complete the assembly. A cold-cure polyurethane resin has been found suitable in practice, as has a single-component (one part) acrylic resin which is cured by UV irradiation.

The resin used is stable under sunlight, in particular having no tendency to yellowing, and to this end may contain a UV inhibitor. It is also stable in the sense that it will not run, break down or delaminate during normal use of the assembly as a window panel installed in a building.

After the resin layer 5 has cured an extremely strong and structurally stable construction is obtained. The resultant laminar assembly is resistant to penetration and splintering, due to the combination of the plastics film 3 with the thick resin layer 5 which provides reinforcement, and the assembly also provides a high degree of fire resistance. These properties are obtained whether or not the film 3 is a clear film.

However, the film 3 is preferably of known form with a sputtered or vacuum deposited metallized coating providing solar control and/or energy saving properties. In this case the solar control/thermal reflection coating is completely protected within the assembly of the invention, with the use of a polyester-based film with polyester-compatible adhesives providing permanent adhesion at both surfaces of the film 3 so that film separation does not occur.

The glass sheets 1 and 2 have a thickness within the range of 2 to 12 mm, the plastics film 3 has a thickness within the range of 0.025 to 0.254 mm, and the resin layer 5 with polyester-compatible adhesive properties has a thickness within the range of 0.1 to 6.0 mm. If strength is not a major consideration a thinner plastics film 3 may be used, when the minimum thickness could be 0.025 mm.

In the specific embodiment of Fig. 2 the plastics film 3 is itself a bi-laminate a fragment of which is shown to a larger scale in inset view. This prelaminated film 3 comprises two thin polyester sheets 3a and 3b with an intermediate solar control and/or energy saving metallic coating 3c which is applied to one of the sheets 3b and 3b prior to lamination thereof. The film 3 is of known form, being commercially available, with the coating 3c applied by a sputtering or vacuum deposition process, being of a nature and application to provide the desired solar control and/or energy saving properties.

When the assembly has solar control properties an elevated internal temperature is produced under incident sunlight, particularly on the outer side of the film 3. Thus the resin layer 5 is such as to be stable up to temperatures of the order of 38°C, and preferably up to about 49°C and the assembly is installed in a building with the glass sheet 2 towards the outside of the building.

## Claims

1. A laminar glass assembly comprising two sheets of glass with a plastics film disposed between them, the plastics film being adhered to the glass sheets by respective adhesive layers, characterized in that the plastics film has a thickness within the range of 0.025 to 0.254 mm and is directly adhered to one of said glass sheets by a thin adhesive layer and to the other of said glass sheets by a thicker layer of adhesive having a thickness which is substantial compared to that of the film and within the range of 0.1 to 6.0 mm, said thicker layer of adhesive having properties such as to provide structural reinforcement of the resultant laminate.

2. An assembly according to claim 1, wherein said plastics film has a solar control and/or energy saving coating and an adhesive coating on one side, both applied to the plastics film prior to incorporation in the assembly with the adhesive coating providing said direct adhesion of the film to said one glass sheet.

3. An assembly according to claim 2, wherein said adhesive coating comprises a pressure-sensitive adhesive.

4. An assembly according to claim 3, wherein said adhesive coating is of a type which is water activated before applying the film to said one glass sheet.

5. An assembly according to any one of the preceding claims, wherein said plastics film is a polyester-based film, preferably a stretched polyester film, with said two adhesive layers both comprising polyester-compatible adhesives.

6. An assembly according to any one of claims 1 to 3, wherein said plastics film is of polyester-based plastics material and said reinforcing adhesive layer is a minimum two-component polyester-based resin with polyester-compatible adhesive properties, and the other of said adhesive layers is provided by a pressure-sensitive adhesive with which the plastics film is pre-coated.

7. An assembly according to any one of the preceding claims, wherein said reinforcing adhesive layer is a synthetic resin mixed with a UV inhibitor.

8. An assembly according to any one of the preceding claims, wherein said reinforcing adhesive layer is a cold-cure polyurethane resin.

9. An assembly according to any one of the preceding claims, wherein said reinforcing adhesive layer is a one-part UV cured acrylic resin.

10. An assembly according to claim 1, wherein said plastics film is itself a laminate of two plastics sheets with a solar control and/or energy saving layer between them.

11. An assembly according to claim 10, wherein said solar control and/or energy saving layer is a metallized layer applied to one of said plastics sheets prior to lamination thereof.

12. An assembly according to any one of the preceding claims, wherein said plastics film has solar control properties and said synthetic resin layer is stable up to a temperature at least of the order of 38°C.

13. An assembly according to claim 12, wherein said synthetic resin layer is stable up to a temperature of 49°C.

14. An assembly according to claim 1, wherein said glass sheets have a thickness within the range of 2 to 12 mm.

15. A method of manufacturing a laminar glass assembly in accordance with any one of claims 1 to 14, characterized by adhering said plastics film to said one glass sheet by said thin adhesive layer including applying said film to said one glass sheet with full surface contact, with said one glass sheet and the adhered film disposed horizontally and the film uppermost pouring the adhesive of said thicker layer in fluid settable form on to said plastics film, applying said other glass sheet to said poured adhesive layer, and allowing or causing the poured adhesive to set to provide said laminar assembly.

**Revendications**

1. Assemblage de verre feuilleté comprenant deux feuilles de verre entre lesquelles une feuille en matière plastique est disposée, la feuille en matière plastique étant collée aux feuilles de verre au moyen de couches adhésives respectives, caractérisé en ce que la feuille en matière plastique a une épaisseur dans l'ordre de 0.025 à 0.254 mm et est collée directement à une des feuilles de verre au moyen d'une couche adhésive fine et à l'autre des feuilles de verre par une couche adhésive plus épaisse ayant une épaisseur substantielle comparée à celle de la feuille en matière plastique et de l'ordre de 0.1 à 6.0 mm, ladite couche adhésive plus épaisse ayant des propriétés telles à fournir un renforcement structurel du produit feuilleté résultant.

2. Assemblage de verre feuilleté selon la revendication 1, dans lequel ladite feuille en matière plastique a un revêtement de contrôle de la lumière solaire et/ou d'économie d'énergie et un revêtement adhésif sur un côté, les deux étant appliqués à la feuille en matière plastique avant son incorporation dans l'assemblage, ledit revêtement adhésif fournissant le collage direct de la feuille en matière plastique à ladite feuille de verre.

3. Assemblage de verre feuilleté selon la revendication 2, dans lequel ledit revêtement adhésif est un adhésif autocollant.

4. Assemblage de verre feuilleté selon la revendication 3, dans lequel ledit revêtement adhésif est du type qui est activé avec de l'eau avant l'application de la feuille en matière plastique à ladite feuille de verre.

5. Assemblage de verre feuilleté selon l'une quelconque des revendications précédentes, dans lequel ladite feuille en matière plastique est une feuille à base de polyester, de préférence une feuille en polyester étirée, les deux couches adhésives étant des adhésifs compatibles avec le polyester.

6. Assemblage de verre feuilleté selon une des revendications 1 à 3, dans lequel ladite couche en matière plastique est formée en une matière plastique à base de polyester et ladite couche adhésive renforçante est une résine à base de polyester à deux composants minimum qui a des propriétés de collage compatible avec le polyester, et l'autre desdites couches adhésives est réalisée par un adhésif autocollant qui est préappliqué sur la feuille en matière plastique.

7. Assemblage de verre feuilleté selon une des revendications précédentes, dans lequel ladite couche adhésive renforçante est une résine synthétique mélangée avec un inhibiteur UV.

8. Assemblage de verre feuilleté selon une des revendications précédentes, dans lequel la couche adhésive renforçante est une résine de polyuréthane durcie à froid.

9. Assemblage de verre feuilleté selon une des revendications précédentes, dans lequel ladite couche adhésive renforçante est une résine acrylique monopièce durcie aux rayons UV.

10. Assemblage de verre feuilleté selon la revendication 1, dans lequel ladite feuille en matière plastique est elle-même une feuille stratifiée de deux feuilles en matière plastique entre lesquelles est posée une couche de contrôle de la lumière solaire et/ou d'économie d'énergie.

11. Assemblage de verre feuilleté selon la revendication 10, dans lequel ladite couche de contrôle de la lumière solaire et/ou d'économie d'énergie est une couche métallisée appliquée à une des feuilles en matière plastique avant leur assemblage.

12. Assemblage de verre feuilleté selon une des revendications précédentes, dans lequel la feuille en matière plastique a des propriétés de contrôle de la lumière solaire et dans lequel la couche en résine synthétique est stable jusqu'à une température d'au moins de l'ordre de grandeur de 38°C.

13. Assemblage de verre feuilleté selon la revendication 12, dans lequel ladite couche en résine synthétique est stable jusqu'à une térméprateur de 49°C.

14. Assemblage de verre feuilleté selon la revendication 1, dans lequel lesdites feuilles de verre ont une épaisseur de l'ordre de 2 à 12 mm.

15. Méthode de fabrication d'un assemblage en verre feuilleté selon une des revendications 1 à 14, caractérisée en ce que ladite feuille en matière plastique est collée à une feuille de verre par ladite couche adhésive fine, y compris l'application de ladite feuille en matière plastique à ladite feuille de verre avec un contact de surface complet, ladite feuille de verre et ladite feuille en matière synthétique collée étant disposées horizontalement et la feuille en matière plastique en haut, l'adhésif de ladite couche plus épaisse est coulé sous forme fluide durcissable sur ladite feuille en matière plastique, l'autre feuille de verre est appliquée à ladite couche d'adhésif coulé, et l'adhésif coulé peut ou est causé de durcir pour fournir ledit assemblage feuilleté.

**Patentansprüche**

1. Verbundglaszusammensetzung mit zwei Tafeln Glas und einer dazwischen angeordneten Kunststoffolie, wobei die Kunststoffolie mit den Glastafeln mittels jeweiliger Klebstoffschichten verklebt ist, dadurch gekennzeichnet, dass die Kunststoffolie eine Dicke im Bereich von 0.025 bis 0.254 mm hat und direkt mit einer der Glastafeln mittels einer dünnen Klebstoffschicht verklebt ist und mit der anderen Glastafel mittels einer dickeren Klebstoffschicht verklebt ist, deren Dicke im Vergleich zu der Dicke der Folie beträchtlich ist und im Bereich von 0.1 bis 6.0 mm liegt, wobei die dickere Klebstoffschicht solche Eigenschaften hat, dass sie eine strukturelle Verstärkung des resultierenden Schichtstoffes bewirkt.

2. Verbundglaszusammensetzung nach Anspruch 1, bei welcher die Kunststoffolie einen Ueberzug zur Sonnenlichtsteuerung und/oder Energieeinsparung hat, sowie eine Klebstoffschicht auf einer Seite, wobei beide auf die Kunststoffolie vor dem Einbringen derselben in die Verbundglasanordnung aufgebracht werden, wobei der Klebstoffüberzug das direkte Verkleben der Folie mit der einen Glasplatte bewirkt.

3. Verbundglaszusammensetzung nach Anspruch 2, in welcher der Klebstoffüberzug ein Haftklebstoff ist.

4. Verbundglaszusammensetzung nach Anspruch 3, in welcher der Klebstoffüberzug von der Art ist, welcher vor dem Anbringen der Kunststoffolie an der einen Glasplatte mittels Wasser aktiviert wird.

5. Verbundglaszusammensetzung nach einem der vorangehenden Ansprüche, in welcher die Kunststoffolie eine Folie auf Polyesterbasis ist, vorzugsweise eine gereckte Polyesterfolie, wobei die beiden Klebstoffschichten beide polyesterverträgliche Klebstoffe enthalten.

6. Verbundglaszusammensetzung nach einem der Ansprüche 1 bis 3, in welcher die Kunststoffolie ein Kunststoffmaterial auf Polyesterbasis ist und die verstärkende Kunststoffschicht ein Minimum - zwei Komponenten - Harz auf Polyesterbasis mit polyesterverträglichen Klebeigenschaften, und die andere der Klebstoffschichten von einem Haftklebstoff gebildet wird, mit welchem die Kunststoffolie vorüberzogen wird.

7. Verbundglaszusammensetzung nach einem der vorangehenden Ansprüche, in welcher die verstärkende Klebstoffschicht ein synthetisches Harz ist, dem ein UV-Inhibitor beigemischt ist.

8. Verbundglaszusammensetzung nach einem der vorangehenden Ansprüchen, in welcher die verstärkende Klebstoffschicht ein gehärtetes Polyurethanharz ist.

9. Verbundglasszusammensetzung nach einem der vorangehenden Ansprüche, in welcher die verstärkende Kunststoffschicht ein einteiliges UV gehärtetes Akrylharz ist.

10. Verbundglaszusammensetzung nach Anspruch 1, in welcher die Kunststoffolie selbst ein Schichtstoff aus zwei Kunststoffolien mit einer dazwischen angeordneten Sonnenlichtsteuer- und/oder Energieeinsparungsschicht ist.

11. Verbundglaszusammensetzung nach Anspruch 10, in welcher die Sonnenlichtsteuer- und/oder Energiesparschicht eine metallisierte Schicht ist, welche auf einer der Kunststoffolien vor dem Schichten derselben aufgebracht

wird.

12. Verbundglaszusammensetzung nach einem der vorangehenden Ansprüche, in welcher die Kunststoffolie Sonnenlichtsteuereigenschaften hat und die Kunstharzschicht bis hin zu einer Temperatur von mindestens der Grössenordnung von 38°C stabil ist.

13. Verbundglaszusammensetzung nach Anspruch 12, in welcher die Kunstharzschicht bis hin zu einer Temperatur von 49°C stabil ist.

14. Verbundglaszusammensetzung nach Anspruch 1, in welcher die Glasplatten eine Dicke im Bereich von 2 bis 12 mm haben.

15. Verfahren zur Herstellung einer Verbundglaszusammensetzung nach einem der Ansprüche 1 bis 14, dadurch gekennzeichnet, dass die Kunststoffolie mit einer der Glasplatten mittels der dünnen Klebstoffschicht verklebt wird, wobei die Folie auf die eine Glasplatte mit voller Flächenberührung aufgebracht wird, wobei die eine Glasplatte und die verklebte Folie horizontal angeordnet sind und die Folie oben liegt, der Kunststoff der dickeren Schicht in flüssiger, formfestigbarer Form auf die Kunststoffolie gegossen wird, die andere Glasplatte auf die gegossene Klebstoffschicht aufgebracht wird, und der gegossene Klebstoff sich verfestigen kann oder zum Verfestigen gebracht wird, um die Verbundglaszusammensetzung zu bewirken.

fig. 1

fig. 2